# EUROPEAN PATENT APPLICATION

(11) **EP 4 016 785 A1**
(43) Date of publication of application: **22.06.2022**
(21) Application number: 20215864.8
(22) Date of filing: 21.12.2020
(51) Int. Cl.: H02J 7/00, H02J 7/35, H02J 9/00, H02J 9/06

(54) **CENTRAL BATTERY EMERGENCY LIGHTING SYSTEM**

(71) Applicant: Zumtobel Lighting GmbH, 6850 Dornbirn (AT)
(72) Inventor: Fink, Jürgen, 6850 Dornbirn (AT)
(74) Representative: Rupp, Christian

(57) **Abstract**

An emergency lighting system (1) is provided, comprising energy storage means (101) chargeable by a photovoltaic system (102) and/or a power grid (103) connectable to the emergency lighting system (1); and operable above a state of charge (SOC) threshold (104) under non-emergency conditions; and an emergency lighting driver (105) operable to drive lighting means (106) connectable to the emergency lighting system (1) off the energy storage means (101) in response to emergency conditions, using a charge below the SOC threshold (104) reserved for emergency response. This sustainably maintains a level of emergency illumination when grid power fails.

## Description

### Technical Field

The present disclosure relates to lighting technology, and in particular to an emergency lighting system, a method of operating the same, and a control unit for the same.

### Background Art

Emergency lighting systems maintain a level of emergency illumination when grid power fails. To this end, exemplary emergency lighting systems may rely on a central battery or a plurality of individual batteries charged by grid power. However, no level of emergency illumination can be maintained if mains power ceases to work and the one or more batteries become depleted. Evidently, such emergency lighting systems fully depend on an availability of grid power.

### Summary of the Invention

The object of the present invention is thus to provide an emergency lighting system capable of sustained maintenance of a level of emergency illumination when grid power fails.

The invention is defined by the appended independent claims. Preferred embodiments are set forth in the dependent claims and in the following description and drawings.

According to a first aspect of the present disclosure, an emergency lighting (EL) system is provided. The emergency lighting system comprises energy storage means; and an emergency lighting driver. The energy storage means is chargeable by a photovoltaic (PV) system and/or a power grid connectable to the emergency lighting system; and operable above a state of charge (SOC) threshold under non-emergency conditions. The emergency lighting driver is operable to drive lighting means connectable to the emergency lighting system off the energy storage means in response to emergency conditions, using a charge below the SOC threshold reserved for emergency response.

The energy storage means may comprise a modular energy storage means.

The energy storage means may be located remotely from the emergency lighting driver.

The energy storage means may comprise a rechargeable battery.

The energy storage means may comprise a solar battery.

The emergency lighting system may further be configured to communicate with a battery management unit of and connectable to the energy storage means so as to establish the SOC threshold, an SOC and/or a testing status of the energy storage means.

The energy storage means may be chargeable by the power grid in response to a price of grid supply below a threshold.

The energy storage means may be dischargeable to the power grid in response to a peak load signaled by the power grid.

The emergency lighting system may be operable under non-emergency conditions to drive the lighting means or other loads off the energy storage means, using the charge above the SOC threshold.

The SOC threshold may comprise an SOC of 10%, preferably 20%, and more preferably 30%.

The emergency conditions may comprise a failure of the power grid.

The emergency lighting system may further comprise at least one of the lighting means and the battery management unit.

The emergency lighting driver may be operable to drive the lighting means for a period in excess of a multiple of a legally required emergency service time in dependence of the SOC of the energy storage means.

According to a second aspect of the present disclosure, a method of operating an emergency lighting system comprising energy storage means is provided. The method comprises charging the energy storage means by a photovoltaic system and/or a power grid connectable to the emergency lighting system; operating the energy storage means above a state of charge under non-emergency conditions; and driving lighting means connectable to the emergency lighting system off the energy storage means in response to emergency conditions, using a charge below the SOC reserved for emergency response.

The method may be performed by an emergency lighting system of the first aspect or any of its embodiments.

According to a third aspect of the present disclosure, a control unit for an emergency lighting system is provided. The control unit is designed for implementing the method of the second aspect or any of its embodiments.

### Advantageous Effects of the Invention

The present invention provides an EL system that
- requires only one high-capacity battery system per building (sharing between PV and EL systems; reserving a fraction of the battery capacity for emergency response),
- provides a higher degree of reliability (structural redundancy of modular building batteries),
- provides a higher degree of self-sufficiency (use of self-produced energy),
- is environmentally friendly (EL system powered by solar power),
- is cost-effective, especially when the building already has a PV system,
- enables participation in proactive energy management in accordance with a Smart Grid (charging from and discharging to the power grid as needed), and not least
- sustainably maintains a level of emergency illumination when grid power fails (buffering by high-capacity battery system; during daytime the photovoltaic system can still provide energy and extend a service time of the EL system).

### Brief Description of the Drawings

Further aspects, advantages and objects of the invention will become evident for the skilled reader by means of the following detailed description of the embodiments of the invention, when taking into conjunction with the figures of the enclosed drawings.
Fig. 1 illustrates an emergency lighting system according to an embodiment of the present disclosure; and
Fig. 2 illustrates a method of operating an emergency lighting system comprising energy storage means 101 according to an embodiment of the present disclosure.

### Detailed Descriptions of Embodiments

The invention will now be described with respect to various embodiments.

The drawings are to be regarded as being schematic representations and elements illustrated in the drawings are not necessarily shown to scale. Rather, the various elements are represented such that their function and general purpose become apparent to a person skilled in the art.

The features of these embodiments may be combined with each other unless specified otherwise.

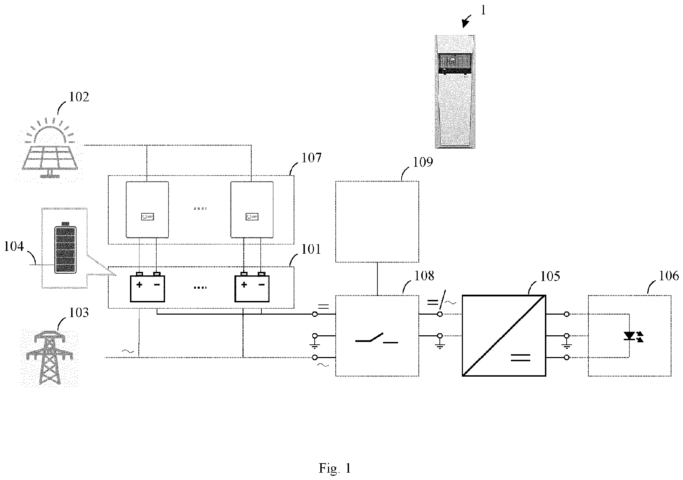

Fig. 1 illustrates an emergency lighting system 1 according to an embodiment of the present disclosure.

The emergency lighting system 1 comprises energy storage means 101 and an emergency lighting driver 105.

The emergency lighting system 1 may further comprise lighting means 106 connectable to the emergency lighting system 1.

The emergency lighting driver 105 may be an AC/DC converter, for example being able to operate the lighting means either from AC or DC supply.

The energy storage means 101 may comprise a modular energy storage means 101.

This may provide a higher degree of reliability (i.e., structural redundancy), and may enable taking advantage of scalability instead of using 12V lead (Pb) acid batteries in series even when not using a PV system.

The energy storage means 101 may be located remotely from the emergency lighting driver 105; may comprise a rechargeable battery, and may in particular comprise a solar battery.

This may enable linking up with energy storage means 101 already installed in a building,
provide a higher degree of self-sufficiency, as self-produced energy is used, and provide an environmentally friendly EL system powered by solar power.

In addition, such energy storage means 101 are typically not discharged to SOC values close to 0%, but operated above an SOC threshold ranging between about 10% and 30% in order to maximize a service life of the energy storage means 101. When reserved for emergency response, a charge below the SOC threshold is typically more than sufficient for emergency lighting.

The SOC threshold 104 may comprise an SOC of 10%, preferably 20%, and more preferably 30%. The higher the applicable SOC threshold 104, the more capacity may be reserved for emergency response.

The emergency lighting system 1 is operable under non-emergency (i.e., normal) conditions as well as under emergency conditions, which may comprise a failure of the power grid 103, in particular.

Under non-emergency conditions, the energy storage means 101 is operable above the SOC threshold 104.

The energy storage means 101 is chargeable by a photovoltaic system 102 and/or a power grid 103 (when the power grid 103 is operable) connectable to the emergency lighting system 1.

This may be very cost-effective, especially when the building already has a PV system.

For the same reason, the energy storage means 101 may be chargeable by the power grid 103 in response to a price of grid supply below a threshold. Given a price threshold of 0,- €, charging may take place in response to a negative price of grid supply, for example. Likewise, given a slightly positive price threshold, charging may occur in response to a low price of grid supply.

Whereas the energy storage means 101 may further be dischargeable to the power grid 103 in response to a peak load signaled by the power grid 103, for example.

This enables participation in proactive energy management in accordance with a Smart Grid, i.e., charging from and discharging to the power grid as needed.

Likewise under non-emergency conditions, the emergency lighting system 1 may be operable to drive the lighting means 106 (such as LED luminaires, or other loads) off the energy storage means 101, using the charge above the SOC threshold 104.
The lighting means 106 can as well be operated directly off the power grid 103. One main task of the emergency lighting system 1 is therefore to decide whether the loads are operated directly from the power grid 103 or from the connected energy storage means 101. It therefore may comprise a load switch 108 to select the appropriate supply 101, 103.

Whereas in response to emergency conditions, the emergency lighting driver 105 is operable to drive the lighting means 106 (depicted on a right portion of Fig. 1) off the energy storage means 101, using a charge below the SOC threshold 104 reserved for emergency response.

In particular, the emergency lighting driver 105 may be operable to drive the lighting means 106 for a period in excess of a multiple of a legally required emergency service time in dependence of the SOC of the energy storage means 101.

This may sustainably extend a period in which the emergency illumination can be maintained active when grid power fails, due to buffering by a high-capacity battery system. Especially, during daytime the PV system can still provide energy and extend a service time of the EL system.

The emergency lighting system 1 may further comprise a battery management unit 107 (depicted on a top-left portion of Fig. 1) of and connectable to the energy storage means 101. The emergency lighting system 1 may be configured to communicate with this battery management unit 107 so as to establish the SOC threshold 104, an SOC and/or a testing status of the energy storage means 101.

As such, only one high-capacity battery system per building may be required, since PV and EL system may share its capacity by reserving a fraction thereof for emergency response.

Such a communication on status and legally required testing may be mandated by a logical and/or spatial separation of the EL system 1 and the battery management 107. In such a scenario, the battery management 107 may manage the energy storage means 101 and reserve the capacity needed for emergency response, while the EL system 1 may manage the lighting means 106 and perform the required testing and documentation.

The emergency lighting system 1 may further comprise a control unit 109 for the emergency lighting system 1. The control unit 109 may be designed for implementing a method 2 according to a second aspect of the present disclosure or any of its embodiments, which will be explained next.

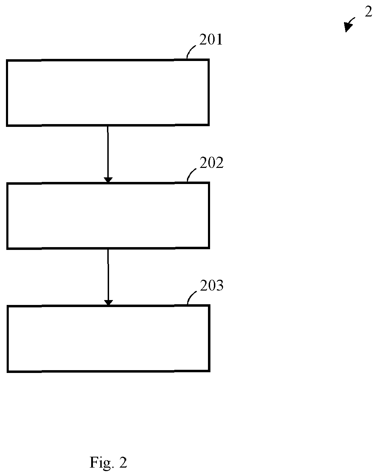

Fig. 2 illustrates a method 2 of operating an emergency lighting system 1 comprising energy storage means 101 according to an embodiment of the present disclosure.

The method 2 comprises basic steps of charging 201, operating 202 and driving 203.

Step 201 involves charging the energy storage means 101 by a photovoltaic system 102 and/or a power grid 103 connectable to the emergency lighting system 1.

Step 202 involves operating the energy storage means 101 above a state of charge SOC under non-emergency conditions.

Step 203 involves driving lighting means 106 connectable to the emergency lighting system 1 off the energy storage means 101 in response to emergency conditions, using a charge below the SOC reserved for emergency response.

The method 2 may be performed by an emergency lighting system 1 according to a first aspect of the present disclosure or any of its embodiments.

Accordingly, the advantages mentioned in connection with the emergency lighting system 1 similarly apply for the method 2 of operating the same.

## Claims

1. An emergency lighting system (1), comprising
energy storage means (101)
chargeable by a photovoltaic system (102) and/or a power grid (103) connectable to the emergency lighting system (1); and
operable above a state of charge (SOC) threshold (104) under non-emergency conditions; and
an emergency lighting driver (105)
operable to drive lighting means (106) connectable to the emergency lighting system (1) off the energy storage means (101) in response to emergency conditions, using a charge below the SOC threshold (104) reserved for emergency response.

2. The emergency lighting system (1) of claim 1,
the energy storage means (101) comprising a modular energy storage means (101).

3. The emergency lighting system (1) of claim 1 or claim 2,
the energy storage means (101) located remotely from the emergency lighting driver (105).

4. The emergency lighting system (1) of any of the preceding claims,
the energy storage means (101) comprising a rechargeable battery.

5. The emergency lighting system (1) of claim 4,
the energy storage means (101) comprising a solar battery.

6. The emergency lighting system (1) of any of the preceding claims,
further configured to communicate with a battery management unit (107) of and connectable to the energy storage means (101) so as to establish the SOC threshold (104), an SOC and/or a testing status of the energy storage means (101).

7. The emergency lighting system (1) of any of the preceding claims,
the energy storage means (101) chargeable by the power grid (103) in response to a price of grid supply below a threshold.

8. The emergency lighting system (1) of any of the preceding claims,
the energy storage means (101) dischargeable to the power grid (103) in response to a peak load signaled by the power grid (103).

9. The emergency lighting system (1) of any of the preceding claims,
the emergency lighting system (1) operable under non-emergency conditions to drive the lighting means (106) or other loads off the energy storage means (101), using the charge above the SOC threshold (104).

10. The emergency lighting system (1) of any of the preceding claims,
the SOC threshold (104) comprising an SOC of 10%, preferably 20%, and more preferably 30%.

11. The emergency lighting system (1) of any of the preceding claims,
the emergency conditions comprising a failure of the power grid (103).

12. The emergency lighting system (1) of any of the preceding claims, further comprising at least one of the lighting means (106) and the battery management unit (107).

13. The emergency lighting system (1) of any of the preceding claims,
the emergency lighting driver (105) operable to drive the lighting means (106) for a period in excess of a multiple of a legally required emergency service time in dependence of the SOC of the energy storage means (101).

14. A method (2) of operating an emergency lighting system (1) comprising energy storage means (101),
the method (2) comprising
charging (201) the energy storage means (101) by a photovoltaic system (102) and/or a power grid (103) connectable to the emergency lighting system (1);
operating (202) the energy storage means (101) above a state of charge (SOC) under non-emergency conditions; and
driving (203) lighting means (106) connectable to the emergency lighting system (1) off the energy storage means (101) in response to emergency conditions, using a charge below the SOC reserved for emergency response.

15. The method (2) of claim 14,
wherein the method (2) is performed by an emergency lighting system (1) of any of the claims 1 to 13.

16. A control unit (109) for an emergency lighting system (1),
wherein the control unit (109) is designed for implementing the method (2) of claim 14 or claim 15.
